Europäisches Patentamt

(19) European Patent Office

Office européen des brevets

(11) Publication number : **0 044 867 B2**

# (12) NEW EUROPEAN PATENT SPECIFICATION

(45) Date of publication of the new patent specification : **27.11.91 Bulletin 91/48**

(51) Int. Cl.⁵ : **C01B 31/36**

(21) Application number : **81900608.1**

(22) Date of filing : **04.02.81**

(86) International application number :
**PCT/US81/00146**

(87) International publication number :
**WO 81/02292 20.08.81 Gazette 81/20**

(54) METHODS FOR THE CONTINUOUS PRODUCTION OF SILICON CARBIDE.

(30) Priority : **08.02.80 US 119680**

(43) Date of publication of application :
**03.02.82 Bulletin 82/05**

(45) Publication of the grant of the patent :
**22.05.85 Bulletin 85/21**

(45) Mention of the opposition decision :
**27.11.91 Bulletin 91/48**

(84) Designated Contracting States :
**AT CH DE FR GB LI LU NL SE**

(56) References cited :
AU-B- 216 974
DE-C- 1 184 739
US-A- 1 979 052
US-A- 2 840 458
US-A- 2 871 004
US-A- 3 205 042
US-A- 3 236 673
US-A- 3 368 871
US-A- 3 754 076

(56) References cited :
US-A- 4 057 396
US-A- 4 100 233
US-A- 4 154 581
Ullmans Encyklopädie der Tech. Chemie. 4 Auflage,1973, Band 3 S. 446 & 434
Comprehensive Organic Chemistry, Barton & Ellis. Vol. 1 P112
Gorham Advanced Material Institute, Advanced Ceramics , 1988 San Diego. "The production of SIC powder for advanced ceramics"
Chemical engineering progress,symposium series ,vol. 62, nr. 67 1966 pp 71-75

(73) Proprietor : **SUPERIOR GRAPHITE CO.**
**20 North Wacker Drive**
**Chicago, IL 60606 (US)**

(72) Inventor : **GOLDBERGER, William M.**
**2175 East Broad Street**
**Columbus, OH 43209 (US)**

(74) Representative : **Crawford, Andrew Birkby et al**
**A.A. THORNTON & CO. Northumberland House 303-306 High Holborn**
**London WC1V 7LE (GB)**

EP 0 044 867 B2

## Description

The present invention is concerned with the production of silicon carbide and, more particularly, with the continuous production of silicon carbide using fluidised bed techniques.

In prior art techniques for the commercial production of silicon carbide, large batch-operated furnaces, known as Acheson furnaces, have been used. In the operation thereof, a large quality silica sand is first mixed with a carbonaceous material, such as petroleum coke, pitch or anthracite, to form a charge which is built up around a central core of granular conductive carbon material, such as calcined petroleum coke or granular graphite. The core is oriented horizontally and carbon or graphite electrodes are disposed through the end walls of the furnace to make electrical contact with the prepared coke. The walls of the furnace comprise loose firebrick and are usually supported by iron castings which can be removed at the end of the process to facilitate extrication of the treated charge. The temperature in the core generally reaches about 2200°C and the flow of heat from the core to the surrounding charge causes the carbide formation reaction to take place:

$$SiO_2 + 3C \rightarrow SiC + 2CO$$

Although useful for some purposes, certain deficiencies and defects are present in the Acheson process. In many cases, the core temperature becomes too high and the silicon carbide decomposes to silicon metal and a graphitic form of carbon. Moreover, the energy efficiency of the Acheson process is relatively low, usually less than about 60%. Also, periods of 50 to 60 hours or longer are required to complete the charging, heating, and cooling cycle. In addition, the Acheson process is not conductive to containing the product gases comprising carbon monoxide from the production of silicon carbide.

German Patent 1,184,739 describes a process for the preparation of very pure silicon carbide for electrical purposes, in mono- and/or poly-crystalline form, by reacting gaseous starting materials, that is hydrocarbons and/or halohydrocarbons as the carbon-bearing material and silane as the silicon-bearing material, at temperatures between 600 and 2500°C in the presence of diluents in a fluidised bed.

U.S. Patent 3,368,871 describes a process for producing silicon carbide particles in a fluidised bed substantially by radiation in a reactor consisting of a lower fluidised bed zone, a middle disengaging or discharge zone, and an upper combustion zone, which process comprises:

(a) introducing endothermic reacting particles into the fluidised bed zone of the reactor, the particles comprising granular carbon and silicon containing compounds selected from silicon, silicon monoxide, quartz, sand, silicic acid, silica gel and silica sols,

(b) passing a non-oxidising fluidising gas upwardly in the lower bed zone to suspend the particles therein, thereby forming the fluidised bed of the reactor,

(c) disengaging the particles from the fluidising gas prior to passing the fluidising gas out of the lower bed zone,

(d) introducing exothermic reactant combustible materials into the upper combustion zone and reacting the same exothermically therein, the heat from the reaction being transferred substantially by radiation to the lower fluidised bed,

(e) simultaneously withdrawing the products of combustion from the upper combustion zone and removing the silicon carbide product of the endothermic reaction from the discharging or disengaging zone without substantial contamination of the silicon carbide with the exothermic reaction products.

The heat required for the silicon carbide-forming reaction is provided, in this U.S. patent, by the combustion of a fuel in the reactor; it is also made clear in this U.S. patent that the process is a batch process.

Australian Patent Specification 216974 is concerned with a process and apparatus for heating finely divided electro-conductive materials, the process comprising passing an electric current through a fluidised bed of the material. This Australian patent is not concerned with the production of silicon carbide and the detailed disclosure relates to the calcining of green petroleum coke or anthracite to provide a calcined aggregate for electrode manufacture.

U.S. Patent 3,205,042 describes a process for producing a carbide in a desired structural shape, which comprises passing the vapour of a transition metal halide (including silicon halide) through a fluidised bed containing inert particles in the lower portion of the bed and, in the upper portion of the bed, carbon having the shape desired in the carbide, while introducing to the bed a reducing agent capable of reducing the vaporised halide to the elemental state, the reducing agent being aluminium and/or hydrogen when the halide is silicon halide.

An object of the present invention is to provide an alternative process for the continuous production of silicon carbide using an electrothermally heated fluidised bed.

We have now developed such an alternative process in which the silicon-bearing material is introduced into the lower zone of an electrothermally heated fluidised bed having two distinct zones which are operated at different temperatures.

According to the present invention, there is provided a method of making a silicon carbide-bearing material, which comprises:

continuously introducing silicon-bearing and carbon-bearing materials into a fluidised bed of electrically conductive particulate material contained within a furnace,

maintaining the bed in a fluidised condition by controlling the flow rate of gases entering beneath the fluidised bed,

applying an electric potential between electrodes in direct contact with the particles of the fluidised bed to cause a sufficient flow of electrical current through the fluidised bed to heat the bed to a temperature at which the silicon-bearing material and the carbon-bearing material react to form a silicon carbide-bearing material, and

continuously removing the silicon carbide-bearing solids from the fluidised bed furnace, characterised in that a relatively coarse particulate carbon-bearing material and a finer particulate carbon-bearing material are supplied to the furnace, the relative size difference between the two particulate materials being chosen and the velocity of the fluidising has being controlled so as to create a fluidised bed comprising an upper zone which principally contains the finer particulate carbon-bearing material and a lower zone which principally contains the coarser particulate carbon-bearing material, the flow of electric current is sufficient to heat the lower zone of the fluidized bed to a temperature above the decomposition temperature of silicon carbide, heat is removed from the upper zone of the fluidised bed so that the temperature of the upper zone is below the decomposition temperature of silicon carbide, but above the temperature required to form silicon carbide by the reaction of silicon vapour with solid carbon, and the silicon-bearing material is introduced into the lower zone of the fluidised bed whereby silicon vapour is formed which passes upwardly into the upper zone of the fluidised bed to react with the finer particulate carbon-bearing material to form silicon carbide-bearing material.

In carrying out the method according to the invention, the fluidising gas may be any non-reactive gas, for example nitrogen or carbon monoxide, and/or may be obtained by recirculating a portion of the gases generated by the chemical reaction within the furnace.

The silicon-bearing material may be introduced as a fine powder having a particle size of less than 10 micrometres.

The silicon-bearing material may also be a liquid, for example silicon tetrachloride or trichlorosilane. Such liquids and other silicon-bearing compounds may also be introduced in gaseous form. Preferred carbon-bearing materials are, for example, green (uncalcined) petroleum coke, coal, natural graphite, and coal or wood chars.

The silicon carbide reaction product may be removed from the furnace in several distinct manners. Thus, it may be removed from a discharge opening located in the bottom of the fluidised bed or located at an elevation disposed above the bottom of the fluidised bed. Alternatively, the silicon carbide may be removed by eleutriation from the upper portion of the fluidised bed and carried out of the furnace by entrainment within the gaseous effluent leaving the fluidised bed furnace, where such silicon carbide is of sufficiently small particulate diameter to do so.

After removal from the furnace, the silicon carbide obtained may be beneficiated by separation of carbon therefrom.

A preferred embodiment of the method according to the invention, and of apparatus for carrying it out, will now be described, by way of example, with reference to the accompanying drawing, in which:

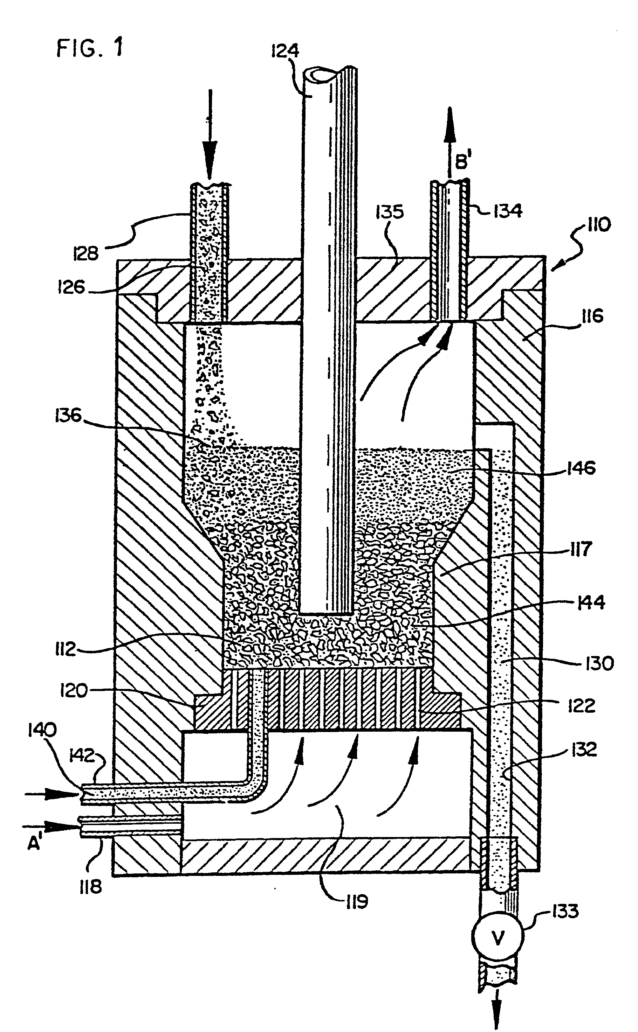

Figure 1 is a fragmented vertical section through an embodiment of such apparatus.

An embodiment of furnace for carrying out the method of the invention is indicated generally at 110 in Figure 1. A particulate carbon material 126 is fed by gravity through inlet 128 in the top of the furnace 110 and finely divided silica 140 is fed through a suitably cooled feed nozzle 142 to enter the fluidised bed 112 of relatively coarse carbon at a point below the upper surface 136 of the bed 112.

The fluidising gas (arrow $A^1$) enters pipe 118 and enters gas chamber 119 and is distributed to bed 112 to fluidise the same through orifices 122 in gas distributor 120, exiting (arrow $B^1$) from the furnace 110 through exhaust pipe 134 in the top 135 of the furnace. The furnace comprises a centrally disposed electrode 124 and, as the other electrode, furnace walls 116. It will be seen that the furnace wall electrode 117 is of smaller diameter in a lower zone 144 than in an upper zone 146. Withdrawal of the carbide/carbon reaction product 130 is effected through a discharge chamber 132 disposed within the furnace wall 116.

The reaction which takes place between silica and carbon in this type of furnace tends to form a silicon carbide coating on the surface of the carbon and to some extent throughout the inner surfaces of the pores of the carbon. The extent of the coating can be controlled by controlling the relative feed rates of silica and carbon, the type of carbon used, and the other process parameters, such as temperature and retention time. The silicon carbide/carbon product obtained is an intimate mixture of silicon carbide and carbon which can be used directly, for example as a silicon/carbon additive to molten iron. The mixture also offers other useful properties as an insulating refractory material and as a granular conductive material for resistive heating in oxidising atmospheres. This reaction product can also be processed by various physical and chemical methods to separate the silicon carbide from the unreacted carbon to yield silicon carbide powder and find flake-like silicon carbide with improved properties for special abrasive and ceramic applications.

For the production of ultrafine particulate silicon carbide, it is advantageous to first generate a gaseous form of silicon which may be injected into bed 112 through feed nozzle 142. Vaporised silicon metal, silicon monoxide vapour, silicon tetrachloride and trichlorosilane are examples of silicon-bearing gases suitable for this reaction. The lower part 144 of fluidised bed 112 is maintained at a temperature sufficiently above the silicon carbide decomposition temperature that silicon in vapour form rises upwardly through the high temperature zone 144. After rising through the high temperature zone 144, the temperature decreases due to loss of heat and silicon vapours and gases can then react with the carbon to form stable silicon carbide. A particularly advantageous embodiment of this concept involves use of green petroleum coke as the carbon source. The volatile carbonaceous components which vaporise in the upper fluidised zone 146 react rapidly with silicon vapours to form a silicon carbide product in sub-micron size. This fume product is entrained in the gases (arrow B[1]) leaving the furnace 110 through exhaust pipe 134 and is collected by cooling and filtering the gases in the unoxidised state.

With the furnace shown in Figure 1, it is also possible to feed fine particulate carbon, such as very finely ground coke, char or natural graphite fines, and cause these fines to react with vaporised forms of silicon in the upper fluidised zone 146 of the furnace 110 to form a fine particulate solid silicon carbide that is removed in part by eleutriation as in the fume product case or as a solid material which is removed by gravity flow through discharge chamber 132, which includes preferably a shut-off valve 133.

The embodiment shown in Figure 1 is particularly advantageous in that the electrical resistance of the lower zone 144 containing the coarser carbon material is substantially lower than that of the upper zone 146 containing the finer carbon and silicon carbide material. In addition, the length of the electrical path from central electrode 124 to the wall electrode 117 being substantially less in the lower zone 144 results in a much higher flow of electrical current from the electrode 124 to the walls 117 in the lower zone 144. These factors cause the lower zone 144 to become substantially hotter to enable the desired difference in temperature between the upper and lower zones 146 and 144 to be maintained. Additionally, the centrally disposed electrode 124 may be formed with a longitudinal passage therethrough for the introduction of supplemental coarse or other carbonaceous material.

It should be emphasised that the characteristics of the silicon carbide materials made as described above are substantially distinct from prior art products, due to differences in starting materials and, specifically, due to substantial differences in the temperature history and elements of the furnace of the present invention. The extremely rapid heating and formation through vaporisation produces silicon carbide which has a substantially higher specific surface area and contains micro-cracks and microporosity substantially different from silicon carbide materials made in the prior art Acheson furnace.

## Claims

1. A method of making a silicon carbide-bearing material, which comprises:

continuously introducing silicon-bearing and carbon-bearing materials into a fluid bed of electrically conductive particulate material contained within a furnace,

maintaining the bed in a fluidised condition by controlling the flow rate of gases entering beneath the fluidised bed,

applying an electric potential between electrodes in direct contact with the particles of the fluidised bed to cause a sufficient flow of electrical current through the fluidised bed to heat the bed to a temperature at which the silicon-bearing material and the carbon-bearing material react to form a silicon carbide-bearing material, and

continuously removing the silicon carbide-bearing solids from the fluidised bed furnace, characterised in that a relatively coarse particulate carbon-bearing material and a finer particulate carbon-bearing material are supplied to the furnace, the relative size difference between the two particulate materials being chosen and the velocity of the fluidising gas being controlled so as to create a fluidised bed comprising an upper zone which principally contains the finer particulate carbon-bearing material and a lower zone which principally contains the coarser particulate carbon-bearing material, the flow of electric current is sufficient to heat the lower zone of the fluidized bed to a temperature above the decomposition temperature of silicon carbide, heat is removed from the upper zone of the fluidised bed so that the temperature of the upper zone is below the decomposition temperature of silicon carbide, but above the temperature required to form silicon carbide by the reaction of silicon vapour with solid carbon, and the silicon-bearing material is introduced into the lower zone of the fluidised bed whereby silicon vapour is formed which passes upwardly into the upper zone of the fluidised bed to react with the finer particulate carbon-bearing material to form silicon carbide-bearing material.

2 A method according to claim 1, in which the fluidising gas is nitrogen or carbon monoxide.

3. A method according to claim 1, in which the fluidising gas is obtained by recirculating a portion of the gases generated by the chemical reaction within the furnace.

4. A method according to any of claims 1 to 3, in which the silicon-bearing material is a fine powder having a particle size of less than 10 micrometres.

5. A method according to any of claims 1 to 4, in which the carbon-bearing material is introduced as green (uncalcined) petroleum coke.

6. A method according to any of claims 1 to 5, in which the silicon carbide-bearing material obtained is beneficiated by separation of carbon therefrom.

## Patentansprüche

1. Verfahren zur Herstellung eines siliciumcarbidtragenden Materials, umfassend:

kontinuierliches Einführen siliciumtragender und kohlenstofftragender Materialien in ein Wirbelbett aus elektrisch leitendem teilchenförmigem Material, das in einem Ofen enthalten ist,

Aufrechthalten des Betts im fluidisierten Zustand durch Regulieren der Strömungsrate von Gasen, die unterhalb des Wirbelbetts eintreten,

Anlegen einer elektrischen Spannung zwischen Elektroden, die in direktem Kontakt mit den Teilchen des Wirbelbetts sind, zur Bewirkung eines ausreichenden elektrischen Stromflusses durch das Wirbelbett, um das Bett auf eine Temperatur zu erhitzen, bei der das siliciumtragende Material und das kohlenstofftragende Material reagieren zur Bildung eines siliciumcarbidtragenden Materials, und

kontinuierliches Entfernen der siliciumcarbidtragenden Feststoffe aus dem Wirbelbett-Ofen, **dadurch gekennzeichnet**, daß ein relativ grobes teilchenförmiges kohlenstofftragendes Material und ein feineres teilchenförmiges kohlenstofftragendes Material in den Ofen eingeführt werden, wobei die relative Größendifferenz zwischen den zwei teilchenförmigen Materialien so gewählt und die Geschwindigkeit des fluidisierenden Gases so reguliert werden, um ein Wirbelbett zu erzeugen, das eine obere Zone, die vorwiegend das feinere teilchenförmige kohlenstofftragende Material enthält und eine untere Zone, die vorwiegend das gröbere teilchenförmige kohlenstofftragende Material enthält, umfaßt, daß der elektrische Stromfluß ausreichend ist, um die untere Zone des Wirbelbetts auf eine Temperatur oberhalb der Zersetzungstemperatur von Siliciumcarbid zu erhitzen, daß Wärme von der oberen Zone des Wirbelbetts abgezogen wird, so daß die Temperatur der oberen Zone unterhalb der Zersetzungstemperatur von Siliciumcarbid, jedoch oberhalb der zur Bildung von Siliciumcarbid durch die Umsetzung von Siliciumdampf mit festem Kohlenstoff erforderlichen Temperatur ist, und daß das silicumtragende Material in die untere Zone des Wirbelbetts eingeführt wird, wodurch Siliciumdampf gebildet wird, der nach oben in die obere Zone des Wirbelbetts streicht, um mit dem feineren teilchenförmigen kohlenstofftragenden Material zur Bildung von siliciumcarbidtragendem Material zu reagieren.

2. Verfahren nach Anspruch 1, wobei das fluidisierende Gas Stickstoff oder Kohlenmonoxid ist.

3. Verfahren nach Anspruch 1, wobei das fluidisierende Gas erhalten wird durch Rezirkulieren eines Teils der durch chemische Reaktion innerhalb des Ofens erzeugten Gase.

4. Verfahren nach mindestens einem der Ansprüche 1 bis 3, wobei das siliciumtragende Material ein feines Pulver mit einem Teilchendurchmesser von weniger als 10 μm ist.

5. Verfahren nach mindestens einem der Ansprüche 1 bis 4, wobei das kohlenstofftragende Material als grüner (nicht calcinierter) Erdölkoks eingeführt wird.

6. Verfahren nach mindestens einem der Ansprüche 1 bis 5, wobei das erhaltene siliciumcarbidtragende Material durch Abtrennung von Kohlenstoff hiervon aufbereitet wird.

## Revendications

1. Un procédé pour fabriquer une matière contenant du carbure de silicium, qui consiste :

à introduire en continu des matières contenant du silicium et contenant du carbone dans un lit fluidisé de matière particulaire électriquement conductrice maintenue à l'intérieur d'un four,

à maintenir le lit à l'état fluidisé par réglage du débit de gaz pénétrant au-dessous du lit fluidisé,

à appliquer un potentiel électrique entre des électrodes en contact direct avec les particules du lit fluidisé pour provoquer le passage à travers le lit fluidisé d'un courant électrique suffisant pour chauffer le lit à une température à laquelle la matière siliciée et la matière carbonée réagissent pour former une matière contenant du carbure de silicium et

à retirer en continu les solides contenant du carbure de silicium du four à lit fluidisé, caractérisé en ce que l'on introduit dans le four une matière carbonée en particules relativement grosses et une matière carbonée en particules plus fines, la différence relative de dimension entre les deux matières en particules étant choisie et la vitesse du gaz de fluidisation étant réglée de manière à créer un lit fluidisé comprenant une zone supérieure qui contient principalement la matière carbonée en plus fines particules et une zone inférieure qui contient principalement la matière carbonée en particules plus grossières, l'intensité du courant électrique est suffisante pour chauffer la zone inférieure du lit fluidisé à une température supérieure à la température de décomposition du carbure de silicium, la chaleur est éliminée de la zone supérieure du lit fluidisé, de telle sorte que la température de la zone supérieure soit inférieure à la température de décomposition du carbure de silicium, mais supérieure à la température nécessaire pour former du carbure de silicium par réaction de la vapeur de silicium avec le carbone solide, et on introduit la matière siliciée dans la zone inférieure du lit fluidisé de sorte qu'il se forme de la vapeur de silicium qui passe de bas en haut dans la zone supérieure du lit fluidisé et réagit avec la matière carbonée en particules plus fines pour former la matière contenant du carbure de silicium.

2. Un procédé selon la revendication 1, dans lequel le gaz de fluidisation est l'azote ou le monoxyde de carbone.

3. Un procédé selon la revendication 1, dans lequel le gaz de fluidisation est obtenu par recyclage d'une portion des gaz produits par la réaction chimique à l'intérieur du four.

4. Un procédé selon l'une quelconque des revendications 1 à 3, dans lequel la matière siliciée et/ou la matière carbonée est une poudre fine ayant une dimension de particules de moins de 10 μm.

5. Un procédé selon l'une quelconque des revendications 1 à 4, dans lequel la matière carbonée est introduite sous la forme de coke de pétrole vert (non calciné).

6. Un procédé selon l'une quelconque des revendications 1 à 5, dans lequel la matière contenant du carbure de silicium obtenue est enrichie par séparation du carbone.

FIG. 1